# EUROPEAN PATENT SPECIFICATION

(11) **EP 0 609 956 B1**
(45) Date of publication and mention of the grant of the patent: **29.10.1997**
(21) Application number: 94200305.4
(22) Date of filing: 04.02.1994
(51) Int. Cl.: F16B 9/02, F16L 3/00

(54) **A spacer for use in a one point fastening of an object, such as a pipe clip, to a wall**
Ein Abstandstück zur Anwendung in einer Einpunktbefestigung eines Gegenstandes, wie einer Rohrklemme, an einer Wand
Entretoise à utiliser dans l'élément fixé à un point d'un objet, comme bride de tuyau à un mur

(30) Priority: 04.02.1993 NL 9300234
(43) Date of publication of application: 10.08.1994
(73) Proprietor: J. van Walraven B.V., NL-3641 RK Mijdrecht (NL)
(72) Inventor: Van Walraven, Jan, NL-3641 GP Mijdrecht (NL)
(74) Representative: Boelsma, Gerben Harm, Ir.

(56) References cited:
- DD-A- 212 299
- DE-B- 2 936 753
- DE-C- 3 132 855

## Description

The invention relates to a spacer as defined in the first part of claim 1.

Such a spacer is disclosed in DD-A-0212299.

With this well-known spacer the spacer means is a connecting web that interconnects the two mounting plates as an integrally formed H-profile. Furthermore the first mounting plate has two fastening slots, one on either side of the connecting web, whereas the slots in the second mounting plate are used for fastening pipe holding means.

The spacer according to the present invention distinguishes from the well-known spacer by the features mentioned in the second part of claim 1.

The spacer according to the invention is particularly suitable for use when installing pipes, such as waste water pipes, rain pipes, sewage pipes and the like. For installing such pipes it has been common practice to use so-called pipe-clips, which are capable of being closed around the pipe to be installed and have a threaded element, such as a nut, welded to it for attachment to a correspondingly threaded suspension rod.

More particularly the spacer according to the invention is intended to substitute the threaded suspension rod just referred to.

The spacer according to the invention can be simply and quickly fastened to a wall by means of a single fastening screw, that extends through the single fastening slot into a hole provided in the wall. Moreover the ultimate fastening location for the respective pipe clip, i.e. the location of the central attachment means on the second mounting plate, can be adjusted in three mutually perpendicular directions, viz. by adjusting the length of the spacer rods, adjusting the first mounting plate in the direction of the long axis of the central slot in said plate and adjusting the second mounting plate in the direction of the long axes of the second slots in said second plate.

The spacer according to the invention has - if placed in a position in which the spacer element are located in a substantially vertical plane - a substantially higher bending strength than a threaded rod of a comparable length, whereas its attachment to the support wall is as simple as that of a threaded rod and the fastening of the pipe clip itself has remained unchanged.

The job on the installation site is even further simplified due to the central attachment hole in the first mounting plate being formed as a slot. As a consequence of the latter feature the holes to be made in advance in the supporting wall need not be located exactly at the desired height or (in case of horizontally extending pipes) be in exactly aligned locations. The play provided by the slot-shaped holes allows, at a later stage, for compensation of deviations, if any.

Moreover the position of the fastening location for the pipe clip relative to the wall can be adjusted in a relatively simple manner.

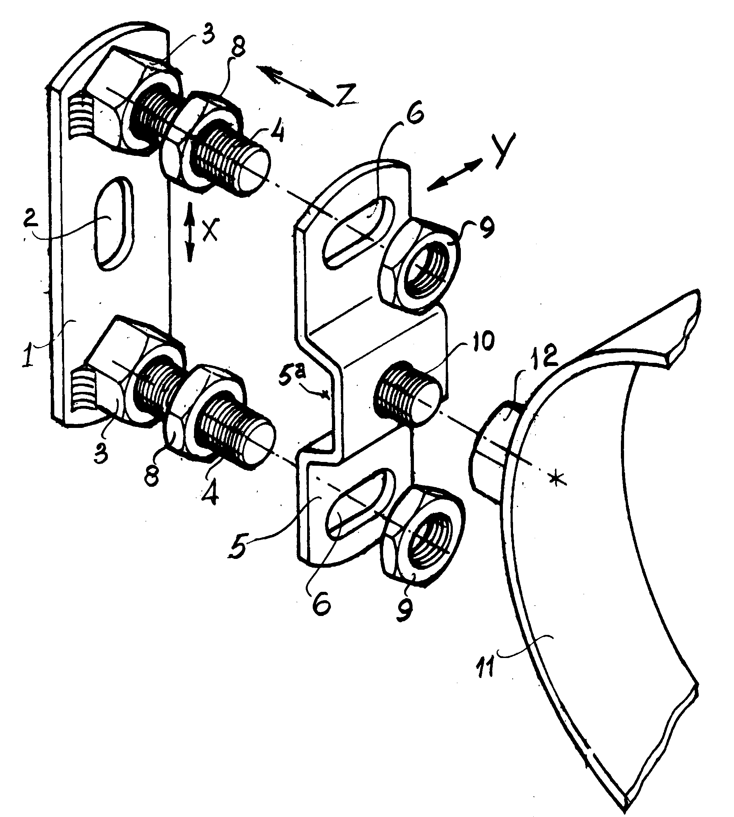

Further features and characteristics of the invention will be hereinafter further explained by way of example with reference to the drawing.

The spacer of which a perspective view is shown in the drawing, comprises a first rectangular mounting plate 1 with a slot-shaped hole 2 extending along the longitudinal axis of said plate for attachment (by means of a fastening screw) to a supporting wall. The plate 1 is provided with two welded nuts 3 in which thraaded rod lengths 4 of a selected length may be screwed.

5 designates a second substantially rectangular mounting plate, provided with holes 6, the pitch of which corresponds with that of the threaded rod lengths 4 screwed into the welded nuts 3. The mounting plate 5 may be placed with its holes 6 onto the threaded rod lengths 4 and fixed relative to the mounting plate 1 by means of the nuts and lock nuts indicated at 7 and 8 respectively. The slot-shaped holes 6 have their "long" axes positioned transversely to those of the slot hole 5 in the mounting plate 1.

The mounting plate 5 has a threaded rod portion 10 extending away from the first mounting plate and being e.g. formed by the shank of a screw bolt, the head of which - in the example shown - is received in an outwardly bulging portion 5a of the mounting plate 5. The projecting threaded rod end 10 is adapted to receive the object to be attached to a wall by means of the described spacer, such object being formed e.g. by a pipe clip, of which a part 11 carrying a welded nut 12 is shown in the drawing.

A particular feature of the described spacer is to be seen therein, that it allows the position of the object, which is attached to the wall by means of this spacer, to be adjusted in three mutually perpendicular directions. The slot hole 2 in the first mounting plate 1, which will, in general, be fastened in the illustrated vertical position to the wall, allows the fastening point at the wall to be varied in the direction of the arrow X, whereas the slot holes 6 in the second mounting plate 5 enable the adjustment of the position of the object in the direction of the arrow Y (i.e. in a substantially horizontal direction parallel to the supporting wall). Finally the distance between the second mounting plate 5 and the first mounting plate 1 and thereby the distance to the supporting wall may be adjusted by displacing the nuts and lock nuts 8, 9 in the arrow direction Z (i.e. in a direction perpendicular to the supporting wall) along the threaded rod lengths 4.

It will be understood that the adjustability in the Z-direction may be increased by using shorter or longer threaded rod lengths 4.

The invention is not limited to the example shown in the drawing. The attachment of the object 11 to the second mounting plate 5 could e.g. also take place by means of a separate screw bolt to be inserted through a hole of the latter mounting plate.

## Claims

1. A spacer for use in a one-point fastening of an object (11) to a wall, comprising
a first mounting plate (1) having a first slot (2) for fastening said plate to a wall,
a second mounting plate (5) having second slots (6) provided in opposite end portions of said second plate (5) and carrying projecting attachment means (10) for the object (11) to be fastened and
spacer means (3, 4, 8, 9) for interconnecting said first and second mounting plates (1, 5),
characterized in that said first slot (2) is centrally located,
that said spacer means (3, 4, 8, 9) are constituted by length-adjustable rod lengths (4) extending from said first mounting plate (1) at locations on either side of said first slot (2) towards said second mounting plate (5) and through said second slots (6),
that said attachment means (10) is provided in a central position on said second mounting plate (5)
and that said second slots (6) have their long axes directed at right angles relative to that of said first slot (2).

2. A spacer according to claim 1, characterized in that the length-adjustable rod lengths have their two axes located in a plane going through the "long" axis of said first slot (2).

3. A spacer according to claims 1-2, characterized in that said length-adjustable rod lengths (4) are threaded rod lengths (4), each carrying a nut (8) and a lock nut (9) for adjustable connection to said second mounting plate (5).

4. A spacer according to claim 3, characterized in that the threaded rod lengths (4) are screwed into nuts (3) that make part of said first mounting plate (1).

5. A spacer according to claims 1-4, characterized in that the central attachment means (10) on said second mounting plate (5) is formed by a short threaded rod portion extending therefrom.

6. A spacer according to claim 5, characterized in that said short threaded rod portion (10) is made by part of a screw bolt, the head of which is received in a bulge (5a) of said second mounting plate (5), said bulge extending in a direction away from said first mounting plate (1).

7. A spacer according to claim 6, characterized in that the screw bolt (10) is welded to the second mounting plate (5).

## Patentansprüche

1. Distanzstück zur Anwendung in einer Einpunktsbefestigung eines Gegenstandes (11) an einer Wand, umfassend
eine erste Montageplatte (1) mit einem ersten Schlitz (2) zum Befestigen der Platte an einer Wand;
eine zweite Montageplatte (5) mit in einandergegenüberliegenden Endteilen der zweiten Platte (5) vorgesehenen zweiten Schlitzen (6) und mit von dieser ausragenden Befestigungsmitteln (10) für den zu befestigenden Gegenstand (11) und
Distanzmittel (3, 4, 8, 9) zum Verbinden der ersten und zweiten Montageplatten (1, 5),
dadurch gekennzeichnet, dass der erste Schlitz (2) eine mittige Position hat,
dass die Distanzmittel (3, 4, 8, 9) durch Stangen (4) mit einer verstellbaren Länge gebildet werden, welche sich von an beiden Seiten des ersten Schlitzes (2) auf der ersten Montageplatte (1) befindlichen Stellen in Richtung der zweiten Montageplatte (5) und durch die zweiten Schlitze (6) erstrecken,
dass die Befestigungsmittel (10) in einer mittigen Position auf der zweiten Montageplatte (5) vorgesehen sind und
dass die langen Achsen der zweiten Schlitze (6) senkrecht zur langen Achse des ersten Schlitzes (2) verlaufen.

2. Distanzstück nach Anspruch 1, dadurch gekennzeichnet, dass die beiden Achsen der längen-verstellbaren Stangen in einer durch die "lange" Achse des ersten Schlitzes (2) gehende Ebene liegen.

3. Distanzstück nach Ansprüchen 1-2, dadurch gekennzeichnet, dass die längen-verstellbaren Stangen (4) mit Gewinde versehene Stangen (4) sind, die je eine Mutter (8) und Gegenmutter (9) zur verstellbaren Verbindung mit der zweiten Montageplatte (5) tragen.

4. Distanzstück nach Anspruch 3, dadurch gekennzeichnet, dass die mit Gewinde versehenen Stangen (4) in Muttern (3) geschraubt sind, welche Teile des ersten Montageplatte (1) sind.

5. Distanzstück nach Ansprüchen 1-4, dadurch gekennzeichnet, dass die mittigen Befestigungsmittel (10) auf der zweiten Montageplatte (5) durch eine von dieser ausragende kurze Gewindestange gebildet wird.

6. Distanzstück nach Anspruch 5, dadurch gekennzeichnet, dass die kurze Gewindestange (10) von einem Teil eines Gewindebolzens gebildet wird, dessen Kopf in einer vom ersten Montageplatte (1) abgekehrten Vertiefung (5a) der zweiten Montageplatte (5) versenkt liegt.

7. Distanzstück nach Anspruch 6, dadurch gekennzeichnet, dass der Schraubenbolzen durch Schweissen an der zweiten Montageplatte (5) befestigt ist.

## Revendications

1. Entretoise destinée à être utilisée dans un dispositif de fixation en un seul point d'un objet (11) à une paroi, comprenant
une première plaque de montage (1) ayant un premier trou oblong (2) pour la fixation de ladite plaque à une paroi,
une seconde plaque de montage (5) ayant des seconds trous oblongs (6) ménagés dans des portions d'extrémité opposées de ladite seconde plaque (5) et supportant un moyen de fixation (10) en saillie pour l'objet (11) destiné à être fixé et
des moyens formant entretoise (3, 4, 8, 9) pour le raccordement desdites première et seconde plaques de montage (1, 5),
caractérisée en ce que ledit premier trou oblong (2) est placé au centre,
en ce que les moyens formant entretoise (3, 4, 8, 9) sont constitués de segments de tige (4) réglables en longueur, s'étendant de ladite première plaque de montage (1) à des emplacements de chaque côté dudit premier trou oblong (2) en direction de ladite seconde plaque de montage (5) et traversant lesdits seconds trous oblongs (6),
en ce que ledit moyen de fixation (10) est placé en une position centrale sur ladite seconde plaque de montage (5)
et en ce que lesdits seconds trous oblongs (6) ont leurs grands axes dirigés perpendiculairement à celui dudit premier trou oblong (2).

2. Entretoise selon la revendication 1, caractérisée en ce que les segments de tige réglables en longueur ont leurs deux axes situés dans un plan passant par le "grand" axe dudit premier trou oblong (2).

3. Entretoise selon les revendications 1 et 2, caractérisée en ce que lesdits segments de tige réglables en longueur (4) sont des segments de tige filetée (4), chacun supportant un écrou (8) et un contre-écrou (9) pour le raccordement réglable à la seconde plaque de montage (5).

4. Entretoise selon la revendication 3, caractérisé en ce que les segments de tige filetée (4) sont vissés dans des écrous (3) qui sont venus de matière avec ladite première plaque de montage (1).

5. Entretoise selon les revendications 1 à 4, caractérisée en ce que le moyen de fixation central (10) sur ladite seconde plaque de montage (5) est formé par une courte portion de tige filetée s'étendant depuis cette plaque.

6. Entretoise selon la revendication 5, caractérisée en ce que ladite courte portion de tige filetée (10) est constituée par une partie d'un boulon, dont la tête est reçue dans une partie saillante (5a) de ladite seconde plaque de montage (5), ladite partie saillante s'écartant de ladite première plaque de montage (1).

7. Entretoise selon la revendication 6, caractérisée en ce que le boulon (10) est soudé à la seconde plaque de montage (5).
